Europäisches Patentamt

European Patent Office

Office européen des brevets

(19)

(11) **EP 0 851 233 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.$^7$: **G01P 15/00**

(21) Anmeldenummer: **97119247.1**

(22) Anmeldetag: **04.11.1997**

(54) **Anordnung zur dreiachsigen Messung von Beschleunigungen**

Triaxial acceleration measuring device

Dispositif de mesure triaxiale d'accélérations

(84) Benannte Vertragsstaaten:
**DE ES FR GB IT SE**

(30) Priorität: **30.11.1996 DE 19649715**

(43) Veröffentlichungstag der Anmeldung:
**01.07.1998 Patentblatt 1998/27**

(73) Patentinhaber: **Conti Temic microelectronic GmbH**
**90411 Nürnberg (DE)**

(72) Erfinder:
• **Seidel, Helmut, Dr.**
**82319 Starnberg (DE)**
• **Schalk, Josef**
**84051 Altheim (DE)**
• **Prechtel, Ulrich**
**81735 München (DE)**

(56) Entgegenhaltungen:
**WO-A-94/12886**     **DE-A- 3 611 360**
**GB-A- 2 207 758**

**Beschreibung**

Die Erfindung betrifft eine Anordnung zur Messung von Beschleunigungen nach den Merkmalen des Patentanspruchs 1.

Aus dem Dokument GB-A-2 207 758 ist eine Anordnung zur Beschleunigungsmessung bekannt, bei der auf einem gemeinsamen Substrat drei Einzelsensoren mit jeweils einer Hauptempfindlichkeitsachse in einem Winkel von 120° angeordnet sind. Die Hauptempfindlichkeitsachsen der jeweiligen Einzelsensoren weisen jeweils einen Fehlwinkel zur Normalen der Substratoberfläche auf. Jeder Einzelsensor weist ein freitragendes, mit einem Biegebalken verbundenes Paddel mit einem Schwerpunkt als seismische Masse auf, wobei jeder Biegebalken Mittel zur Messung der Auslenkung der seismischen Masse aufweist und alle Biegebalken parallel zur Oberfläche des Substrats angeordnet sind.

Bei dieser Anordnung ist die Auswertung der Meßergebnisse kompliziert, da die Umrechnung der einzelnen Koordinaten in die Hauptachsen der Waferebene zu keinen einfachen Berechnungsformeln und die Rückführung der mit dieser Anordnung gemessenen Kräfte auf ein am Wafer orientiertes Koordinatensystem zu einem sehr komplizierten Gleichungssystem führt. Zudem ist eine solche Anordnung in der Praxis mit den typischen Verfahren der Mikromechanik nur äußerst schwierig herzustellen.

Eine bekannte Anordnung zur dreiachsigen Messung von Beschleunigungen ist im Dokument WO 94 12886 A beschrieben. Bei dieser Anordnung nach dem Stand der Technik handelt es sich um die monolithische Kombination von vier zueinander um jeweils 90° gedrehten und auf einem Substrat angeordneten Sensoren, die identisch sind. Bei jedem Sensor ist am freischwingenden Ende eines freitragenden und geneigten Steges eine seismische Masse angeordnet. Der freitragende Steg weist einen kristallographisch festgelegten Fehlwinkel relativ zur Substratoberfläche auf.

Eine derartige Anordnung weist den Nachteil auf, dass die geneigten Stege nur durch ein doppelseitiges und deshalb sehr aufwendiges Ätzverfahren hergestellt werden können. Dabei tritt durch Fehljustage der zum Ätzen notwendigen Masken eine große Unsicherheit im Hinblick auf die Dicke der Stege auf.

Es ist Aufgabe der Erfindung, eine Anordnung zur Messung von Beschleunigungen anzugeben, bei der die genannten Nachteile vermieden werden.

Diese Aufgabe wird gelöst durch eine Anordnung zur Messung von Beschleunigungen mit den im Patentanspruch 1 genannten Merkmalen.

Die Vorteile der Erfindung liegen darin, dass durch die räumlich sehr enge Anordnung von vier bzw. zwei identischen Sensoren sehr gute Gleichlaufeigenschaften erreicht werden, wodurch Driftfehler über Temperatur und Zeit weitgehend eliminiert werden. Weiterhin baut die Anordnung auf einer für einen einachsigen Beschleunigungssensor entwickelten Technologie auf, so dass vorhandene Fertigungseinrichtungen und erworbenes Fachwissen weiter genutzt werden können.

Vorteilhafte Weiterbildungen der Erfindung sind in den abhängigen Ansprüchen beschrieben.

Ein Ausführungsbeispiel der Erfindung ist nachstehend ausführlich erläutert und anhand der Figuren dargestellt.

Es zeigen

Fig. 1:  eine Draufsicht auf eine erfindungsgemäße Anordnung zur dreiachsigen Messung von Beschleunigungen, bestehend aus vier identischen Beschleunigungssensoren auf einem gemeinsamen Substrat,

Fig. 2:  eine Schnittzeichnung durch die Anordnung nach Fig. 1,

Fig. 3:  eine Auswerteschaltung zur Bestimmung der Beschleunigungen,

Fig. 4:  eine Draufsicht auf eine Anordnung zur zweiachsigen Messung von Beschleunigungen, bestehend aus zwei identischen Beschleunigungssensoren auf einem gemeinsamen Substrat und

Fig. 5:  eine räumliche Darstellung der Anordnung nach Fig. 4.

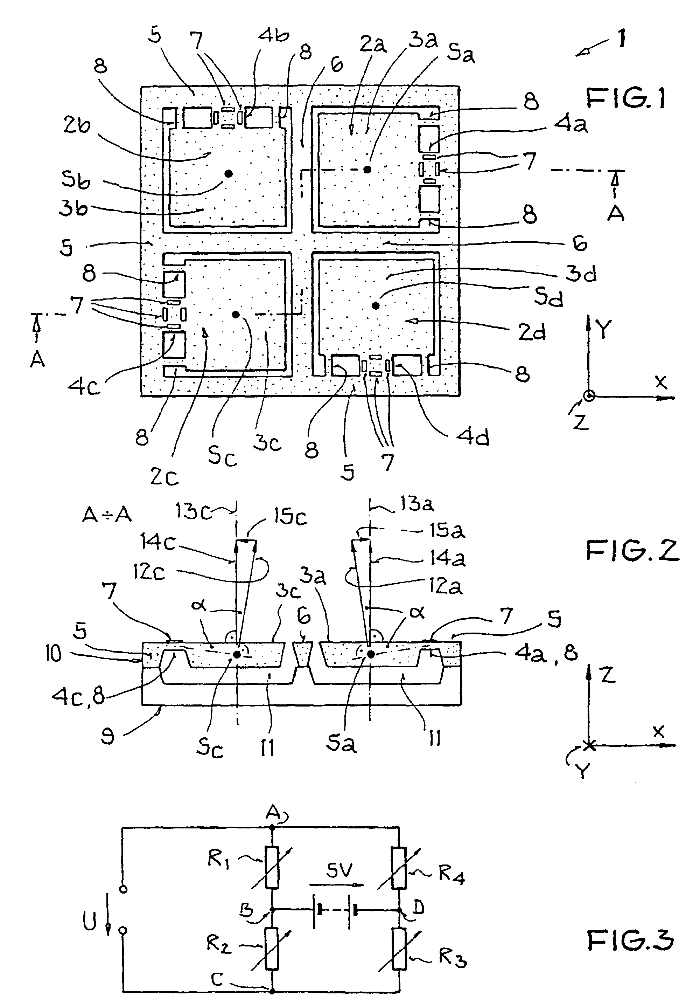

Die **Fig. 1** zeigt einen Beschleunigungssensor **1** zur dreiachsigen Messung von Beschleunigungen, bestehend aus vier identischen Einzelsensoren **2a, 2b, 2c** und **2d**. Jeder Einzelsensor **2a-d** weist als seismische Masse ein Paddel **3a, 3b, 3c** und **3d** auf, das jeweils mittels eines Biegebalkens **4a, 4b, 4c** und **4d** mit einem Außenrahmen **5** verbunden ist. Zur zusätzlichen Befestigung der Paddel **3a-d** am Außenrahmen **5** sind jeweils zwei Seitenstege **8** pro Paddel vorhanden, die aber auch entfallen können. Jedes Paddel **3a-d** weist einen Schwerpunkt $S_a$, $S_b$, $S_c$ und $S_d$ auf. Der Außenrahmen **5** hält die vier Einzelsensoren **2a-d** zusammen und ist durch einen Zwischenrahmen **6** unterteilt. Der Zwischenrahmen **6** kann auch entfallen.

Jeder Einzelsensor **2a-d** weist in X-, Y, und Z-Richtung eine Empfindlichkeit auf. Zur Bestimmung von zugehörigen Beschleunigungen $a_X$, $a_Y$ und $a_Z$ sind jedoch nicht alle Empfindlichkeiten notwendig, sondern nur die nachfolgend genannten:

- Empfindlichkeit $k_z$ aller Einzelsensoren **2a-d** in Z-Richtung,
- Empfindlichkeit $k_x$ der Einzelsensoren **2a** und **2c** in X-Richtung,
- Empfindlichkeit $k_y$ der Einzelsensoren **2b** und **2d** in Y-Richtung,
- Querempfindlichkeit $q_x$ der Einzelsensoren **2b** und **2d** in X-Richtung und
- Querempfindlichkeit $q_y$ der Einzelsensoren **2a** und **2c** in Y-Richtung.

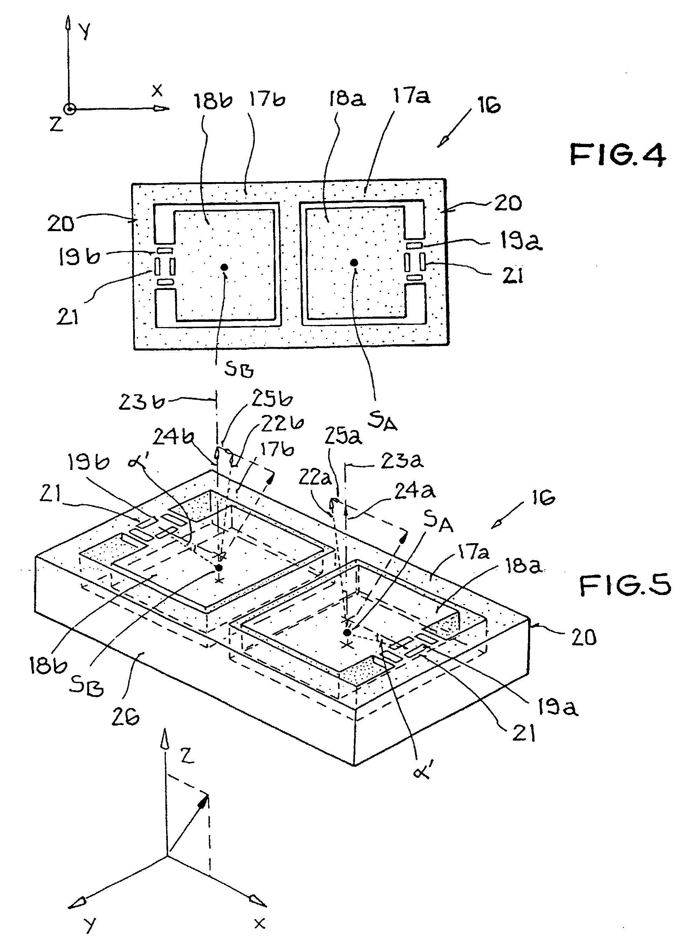

Auf jedem Biegebalken **4a-d** sind jeweils vier zu einer Wheatstoneschen Widerstandsbrücke (Fig. 3) verschaltete Piezowiderstände **7** angeordnet. Sie dienen zur Messung einer Biegung, die auftritt, wenn auf den Beschleunigungssensor **1** eine oder mehrere Beschleunigungskräfte wirken. Aufgrund der Biegung werden die Piezowiderstände **7** verformt, wodurch sich ihr Widerstandswert verändert. Daher ist der Widerstandswert der Piezowiderstände **7** ein Maß für die auf den jeweiligen Biegebalken **4a-d** wirkende Beschleunigungskraft.

in **Fig. 2** ist der Beschleunigungssensor **1** der Fig. 1 im Schnitt **A-A** dargestellt. Beispielsweise durch Wafer-Bondung ist eine untere Deckscheibe **9** aus Silizium mit einer ebenfalls aus Silizium bestehenden und auf bekannte mikromechanische Weise strukturierten Scheibe **10** verbunden. Mittels eines Ätzprozesses sind in die Scheibe **10** die Paddel **3**, die Biegebalken **4** und die seitenstege **8** strukturiert. Mittels eines Diffusionsprozesses sind die jeweils vier Piezowiderstände **7** auf den Biegebalken **4** in die Scheibe **10** eingebracht. Durch die Strukturierung der Scheibe **10** bildet sich zwischen den Paddel **3** und der Deckscheibe **9** ein Luftspalt **11** aus, so daß die Paddel **3** beim Einwirken einer Beschleunigungskraft auch in Richtung zur Deckscheibe **9** hin ausweichen können.

Jedes Paddel **3** weist eine durch den jeweiligen Schwerpunkt $S_a$, $S_b$, $S_c$ und $S_d$ verlaufende Hauptempfindlichkeitsachse **12a**, **12b**, **12c** und **12d** auf, deren Richtung infolge der einseitigen Aufhängung der Paddel **3** und infolge der ausgelagerten Masseschwerpunkte $S_a$, $S_b$, $S_c$ und $S_d$ nicht parallel zu einer jeweiligen Normalen **13a**, **13b**, **13c** und **13d** verläuft. zwischen der Hauptempfindlichkeitsachse **12a-d** und der jeweiligen Normalen **13a-d** stellt sich ein sogenannter Fehlwinkel $\alpha$ ein, der dadurch zustande kommt, daß der jeweilige Schwerpunkt $S_a$, $S_b$, $S_c$ und $S_d$ in Z-Richtung tiefer liegt als der jeweilige Biegebalken **4a-d** als Aufhängung des jeweiligen Paddels **3a-d.** Aufgrund des identischen Aufbaus ist der Fehlwinkel $\alpha$ bei allen Einzelsensoren **2a-d** gleich groß; typische Werte für den Fehlwinkel $\alpha$ liegen zwischen 10° und 20°. Das Prinzip ist auch verallgemeinerbar, so daß die Einzelsensoren **2a-d** unterschiedliche Fehlwinkel aufweisen.

Um Beschleunigungen in X-, Y- und Z-Richtung messen zu können, werden die Hauptempfindlichkeitsachsen **12a-d** in jeweilige Komponenten **14a, 14b, 14c** und **14d** parallel zur Normalen **13a-d** und in Komponenten **15a, 15b, 15c** und **15d** senkrecht zur Normalen **13a-d** zerlegt.

Da die Paddel **3a-d** bedingt durch den Herstellungsprozeß weitgehend gleiche geometrische Abmessungen aufweisen, ist jeweils ihre Empfindlichkeit $k_x$ in X-Richtung, ihre Empfindlichkeit $k_y$ in Y-Richtung, ihre Empfindlichkeit $k_z$ in Z-Richtung, ihre Querempfindlichkeit $q_x$ in X-Richtung und ihre Querempfindlichkeit $q_y$ in Y-Richtung ebenfalls weitgehend gleich.

**Fig. 3** zeigt eine bekannte Wheatstonesche Brückenschaltung mit Schaltungspunkten **A, B, C** und **D.** zwischen den Schaltungspunkten **A** und **B** ist ein veränderbarer widerstand $R_1$, zwischen den Schaltungspunkten **B** und **C** ein veränderbarer Widerstand $R_2$, zwischen den Schaltungspunkten **C** und **D** ein veränderbarer Widerstand $R_3$ und zwischen den Schaltungspunkten **D** und **A** ein veränderbarer Widerstand $R_4$ angeordnet, wobei es sich bei den veränderbaren Widerständen $R_1$ bis $R_4$ um die jeweils vier Plezowiderstände **7** (Fig. 1) auf den Biegebalken **4** (Fig. 1) handelt. Die Schaltungspunkte **B** und D sind mit einer Spannungsquelle von typisch 5 V verbunden, und an den Schaltungspunkten **A** und **C** wird eine Ausgangsspannung **u** abgegriffen, bei der es sich jeweils um eine Ausgangsspannung $U_A$, $U_B$, $U_C$ und $U_D$ der Piezowiderstände **7** der Einzelsensoren **2a-d** handelt.

Die widerstandsänderung der widerstände $R_1$ und $R_3$ verläuft in umgekehrter Richtung wie die widerstandsänderung der Widerstände $R_2$ und $R_4$, so daß aufgrund einer Beschleunigungskraft in einer bestimmter Richtung, beispielsweise in Z-Richtung, der Wert der Widerstände $R_1$ und $R_3$ sich verkleinert, während sich der Wert der Widerstände $R_2$ und $R_4$ vergrößert.

Zur Berechnung einer auf den Beschleunigungssensor **1** (Fig. 1) einwirkenden Beschleunigung mit den Komponenten $a_x$, $a_y$ und $a_z$ in X-, Y- und Z-Richtung gelten folgende Gleichungssysteme:

$$a_x = \frac{1}{2 \cdot (k_x^2 + q_x^2)} \cdot [k_x \cdot (U_c \cdot U_A) + q_X \cdot (U_D - U_B)],$$

$$a_Y = \frac{1}{2 \cdot (k_y{}^2 + q_y{}^2)} \cdot [k_y \cdot (U_D \cdot U_B) - q_y - (U_C - U_A)] \text{ und}$$

$$a_Z = \frac{1}{4 \cdot k_z} \cdot (U_A + U_B + U_C + U_D),$$

wobei gilt:

$a_X$    Beschleunigungskomponente in X-Richtung
$a_Y$    Beschleunigungskomponente in Y-Richtung
$a_Z$    Beschleunigungskomponente in Z-Richtung
$k_x$    Empfindlichkeit der Einzelsensoren 2a und 2c in X-Richtung
$k_y$    Empfindlichkeit der Einzelsensoren 2b und 2d in Y-Richtung
$k_z$    Empfindlichkeit der Einzelsensoren 2a-d in Z-Richtung
$q_x$    Querempfindlichkeit der Einzelsensoren 2b und 2d in X-Richtung
$q_y$    Querempfindlichkeit der Einzelsensoren 2a und 2c in Y-Richtung
$U_A$    Ausgangsspannung von Sensor 2a
$U_B$    Ausgangsspannung von Sensor 2b
$U_C$    Ausgangsspannung von Sensor 2c
$U_D$    Ausgangsspannung von Sensor 2d.

Bei gleicher Auslegung der Einzelsensoren **2a-d** werden die Koeffizienten $\mathbf{k_x}$ und $\mathbf{k_y}$ sowie $\mathbf{q_x}$ und $\mathbf{q_y}$ jeweils untereinander identisch sein. Die Ausgangsspannungen $\mathbf{U_A}$, $\mathbf{U_B}$, $\mathbf{U_C}$ und $\mathbf{U_D}$ der Piezowiderstände **7** der Einzelsensoren **2a-d** werden einer Auswerteeinheit (nicht dargestellt, vorzugsweise ein Mikroprozessor) zugeführt, die vorteilhaft einen Festspeicher zur Speicherung der Empfindlichkeitsfaktoren aufweist und in der die Berechnung einer Beschleunigung mit den Komponenten $\mathbf{a_X}$, $\mathbf{a_Y}$ und $\mathbf{a_Z}$ erfolgt.

Die Fig. 4 und 5 zeigen einen Beschleunigungssensor 16 zur zweiachsigen Messung von Beschleunigungen, welcher nicht unter den Schutzbereich der Ansprüche fällt. Dieser Beschleunigungssensor **16** besteht aus zwei identischen Einzelsensoren **17a** bzw. **17b** auf einem gemeinsamen Substrat **26**. Jeder Einzelsensor **17a** bzw. **17b** weist als seismische Masse ein Paddel **18a** bzw. **18b** auf, das jeweils mittels eines Biegebalkens **19a** bzw. **19b** mit einem Außenrahmen **20** verbunden ist. Jedes Paddel **18a** bzw. **18b** weist einen Schwerpunkt $\mathbf{s_A}$ bzw. $\mathbf{S_B}$ auf. Der Außenrahmen **20** hält die beiden Einzelsensoren **17a** und **17b** zusammen.

Auf jedem Biegebalken **19a** bzw. **19b** sind jeweils vier zu einer Wheatstoneschen Widerstandsbrücke (Fig. 3) verschaltete Piezowiderstände **21** angeordnet. Sie dienen, wie bereits weiter oben beschrieben, zur Messung einer Biegung, die auftritt, wenn auf den Beschleunigungssensor **16** eine oder mehrere Beschleunigungskräfte wirken.

Jeder Einzelsensor **17a** bzw. **17b** weist in x- und Z-Richtung eine Empfindlichkeit auf. Zur Bestimmung von zugehörigen Beschleunigungen $\mathbf{a_X'}$ und $\mathbf{a_Z'}$ sind die nachfolgend genannten Empfindlichkeiten notwendig:

- Empfindlichkeit $\mathbf{k_z'}$ der Einzelsensoren **17a** bzw. **17b** in Z-Richtung,
- Empfindlichkeit $\mathbf{k_x'}$ der Einzelsensoren **17a** bzw. **17b** in X-Richtung.

Jedes Paddel **18a** bzw. **18b** weist eine durch den jeweiligen Schwerpunkt $\mathbf{S_A}$ bzw. $\mathbf{S_B}$ verlaufende Hauptempfindlichkeitsachse **22a** bzw. **22b** auf, deren Richtung infolge der einseitigen Aufhängung der Paddel **18a** bzw. **18b** und infolge der ausgelagerten Masseschwerpunkte $\mathbf{S_A}$ bzw. $\mathbf{S_B}$ nicht parallel zu einer jeweiligen Normalen **23a** bzw. **23b** verläuft. Zwischen der Hauptempfindlichkeitsachse **22a** bzw. **22b** und der jeweiligen Normalen **23a** bzw. **23b** stellt sich, wie bereits erläutert, ein sogenannter Fehlwinkel $\alpha'$ ein. Aufgrund des identischen Aufbaus ist der Fehlwinkel $\alpha'$ bei beiden Einzelsensoren **17a** bzw. **17b** gleich groß; typische Werte für den Fehlwinkel $\alpha'$ liegen zwischen 10° und 20°. Das Prinzip ist auch verallgemeinerbar, so daß die Einzelsensoren **17a** bzw. **17b** unterschiedliche Fehlwinkel aufweisen.

Um Beschleunigungen in X- und Z-Richtung messen zu können, werden die Hauptempfindlichkeitsachsen **22a** bzw. **22b** in jeweilige Komponenten **24a** bzw. **24b** parallel zur Normalen **23a** bzw. **23b** und in Komponenten **25a** bzw. **25b** senkrecht zur Normalen **23a** bzw. **23b** zerlegt.

Da die Paddel **18a** bzw. **18b** bedingt durch den Herstellungsprozeß weitgehend gleiche geometrische Abmessungen aufweisen, ist jeweils ihre Empfindlichkeit $\mathbf{k_x'}$ in X-Richtung und ihre Empfindlichkeit $\mathbf{k_z'}$ in Z-Richtung weitgehend gleich.

Zur Berechnung einer auf den Beschleunigungssensor **16** einwirkenden Beschleunigung mit den Komponen-

ten $a_x'$ und $a_z'$ in X- und Z-Richtung gelten folgende Gleichungen:

$$a_x' = \frac{1}{2 \cdot k_x'} \cdot (U_B' - U_A')$$

und

$$a_z' = \frac{1}{2 \cdot k_2'} \cdot (U_A' + U_B'),$$

wobei gilt:

$a_x'$      Beschleunigungskomponente in X-Richtung
$a_z'$      Beschleunigungskomponente in Z-Richtung
$k_x'$      Empfindlichkeit der Einzelsensoren 17a und 17b in X-Richtung
$k_z'$      Empfindlichkeit der Einzelsensoren 17a und 17b in Z-Richtung
$U_A'$      Ausgangsspannung von Sensor 17a
$U_B'$      Ausgangsspannung von Sensor 17b.

Bei gleicher Auslegung der Einzelsensoren **17a** und **17b** werden die Koeffizienten $\mathbf{k_x'}$ und $\mathbf{k_z'}$ identisch sein. Die Ausgangsspannungen $\mathbf{U_A'}$ und $\mathbf{U_B'}$ der Piezowiderstände **21** der Einzelsensoren **17a** und **17b** werden einer Auswerteeinheit (nicht dargestellt, vorzugsweise ein Mikroprozessor) zugeführt, die vorteilhaft einen Festspeicher zur Speicherung der Empfindlichkeitsfaktoren aufweist und in der die Berechnung einer Beschleunigung mit den Komponenten $a_x'$ und $a_z'$ erfolgt.

Neben dem hier beschriebenen piezoresistiven Prinzip kann zur Messung der Auslenkung der seismischen Masse auch ein anderes, beispielsweise das kapazitive Prinzip, verwendet werden.

## Patentansprüche

**1.** Anordnung zur Messung von Beschleunigungen, die folgende Merkmale aufweist:

a) die Anordnung besteht aus vier einzelnen, auf einem gemeinsamen Substrat (10) angeordneten Einzelsensoren (2a-d) mit jeweils einer Hauptempfindlichkeitsachse (12 a-d).
b) jeder Einzelsensor (2a-d) weist ein freitragendes, mit einem Biegebalken (4a-d) verbundenes Paddel (3a-d) mit einem Schwerpunkt ($S_a$, $S_b$, $S_c$, $S_d$) als seismische Masse auf,
c) jeder Biegebalken (4a-d) weist ein Mittel zur Messung der Auslenkung der seismischen Masse auf,

**dadurch gekennzeichnet, dass** alle Biegebalken (4a-d) parallel zur Oberfläche des Substrats (10) angeordnet sind und
dass die Hauptempfindlichkeitsachsen (12a-d) der jeweiligen Einzelsensoren (2a-d) jeweils einen Fehlwinkel ($\alpha$) zur durch den Schwerpunkt ($S_a$, $S_b$, $S_c$, $S_d$) der seismischen Masse verlaufenden Normalen der Substratoberfläche aufweisen. wobei der Fehlwinkel (a) zwischen 10° und 20° beträgt.

**2.** Anordnung nach Anspruch 1, **dadurch gekennzeichnet, dass** der Fehlwinkel ($\alpha$) dadurch hervorgerufen ist, dass der Schwerpunkt ($S_a$, $S_b$, $S_c$, $S_d$) der seismischen Masse außerhalb der Ebene der Biegebalken (4a-d) liegt und eine einseitige Aufhängung der seismischen Masse gewählt ist

**3.** Anordnung nach einem der vorangehenden Ansprüche, **dadurch gekennzeichnet, dass** die Anordnung aus Silizium hergestellt ist.

**4.** Anordnung nach einem der vorangehenden Ansprüche, **dadurch gekennzeichnet, dass** die Anordnung auf mikromechanische Welse hergestellt ist.

**5.** Anordnung nach Anspruch 1, **dadurch gekennzeichnet, dass** es sich bei den Mitteln zur Messung der Auslenkung der seismischen Masse um Piezowiderstände (7) handelt, die auf den Biegebalken (4a-d) angeordnet sind.

**6.** Anordnung nach Anspruch 5, **dadurch gekennzeichnet, dass** auf jedem Biegebalken (4a-d) vier Piezowiderstände (7) angeordnet sind.

**7.** Anordnung nach Anspruch 6, **dadurch gekennzeichnet, dass** die vier Piezowiderstände (7) zu einer Wheatstonschen Widerstandsbrücke zusammengeschaltet sind.

**8.** Anordnung nach Anspruch 1, **dadurch gekennzeichnet, dass** zur Messung der Auslenkung der seismischen Masse ein kapazitiver Abgriff verwendet wird.

## Claims

**1.** Arrangement for measuring accelerations, which has the following features:

a) the arrangement comprises four individual single sensors (2a-d), which are disposed on a joint substrate (10) and respectively have a main sensitivity axis (12a-d),
b) each single sensor (2a-d) has a cantilevered paddle (3a-d), which is connected to a bending beam (4a-d) and has a centre of gravity ($S_a$, $S_b$, $S_c$, $S_d$) as seismic mass,
c) each bending beam (4a-d) has a means for measuring the deflection of the seismic mass,

**characterised in that** all the bending beams (4a-d) are arranged parallel to the surface of the substrate (10) and that the main sensitivity axes (12a-d) of the respective single sensors (2a-d) have a respective displacement angle ($\alpha$) to the normal of the substrate surface running through the centre of gravity ($S_a$, $S_b$, $S_c$, $S_d$) of the seismic mass, wherein the displacement angle ($\alpha$) amounts to between 10° and 20°.

**2.** Arrangement according to Claim 1, **characterised in that** the displacement angle ($\alpha$) arises as a result of the centre of gravity ($S_a$, $S_b$, $S_c$, $S_d$) of the seismic mass lying outside the plane of the bending beams (4a-d) and a one-sided suspension of the seismic mass being selected.

**3.** Arrangement according to one of the preceding claims, **characterised in that** the arrangement is made of silicon.

**4.** Arrangement according to one of the preceding claims, **characterised in that** the arrangement is produced in a micromechanical manner.

**5.** Arrangement according to Claim 1, **characterised in that** the means for measuring the deflection of the seismic mass are piezo-resistors (7), which are disposed on the bending beams (4a-d).

**6.** Arrangement according to Claim 5, **characterised in that** four piezo-resistors (7) are disposed on each bending beam (4a-d).

**7.** Arrangement according to Claim 6, **characterised in that** the four piezo-resistors (7) are interconnected to form a Wheatstone bridge.

**8.** Arrangement according to Claim 1, **characterised in that** a capacitive tap is used for measurement of the deflection of the seismic mass.

## Revendications

**1.** Dispositif pour mesurer des accélérations, qui présente les caractéristiques suivantes :

a) le dispositif est constitué de quatre capteurs individuels (2a-d), qui sont disposés sur un substrat commun (10) et comportent chacun un axe principal de sensibilité (12a-d),
b) chaque capteur individuel (2a-d) possède une palette (3a-d) autoportante disposée en console et pourvue d'une poutre de flexion (4a-d) et possédant un centre de gravité ($S_a$, $S_b$, $S_c$, $S_d$) en tant que masse sismique,
c) chaque poutre de flexion (4a-d) possède un moyen pour mesurer la déviation de la masse sismique,

**caractérisé en ce que** toutes les poutres de flexion (4a-d) sont disposées parallèlement à la surface du substrat (10), et

que les axes principaux de sensibilité (12a-d) des différents capteurs individuels (2a-d) présentent respectivement un angle d'erreur ($\alpha$) par rapport à la normale à la surface du substrat, qui passe par le centre de gravité ($S_a$, $S_b$, $S_c$, $S_d$) de la masse sismique, l'angle d'erreur ($\alpha$) étant compris entre 10° et 20°.

2. Dispositif selon la revendication 1, **caractérisé en ce que** l'angle d'erreur ($\alpha$) est dû au fait que le centre de gravité ($S_a$, $S_b$, $S_c$, $S_d$) de la masse sismique est situé à l'extérieur des poutres de flexion (4a-d) et qu'une suspension unilatérale de la masse sismique est choisie.

3. Dispositif selon l'une des revendications précédentes, **caractérisé en ce que** le dispositif est réalisé en silicium.

4. Dispositif selon l'une des revendications précédentes, **caractérisé en ce que** le dispositif est fabriqué selon une réalisation de micromécanique.

5. Dispositif selon la revendication 1, **caractérisé en ce qu'**en ce qui concerne les moyens de mesure de la déviation de la masse sismique, il s'agit de résistances piézoélectriques (7), qui sont disposées sur les poutres de flexion (4a-d).

6. Dispositif selon la revendication 5, **caractérisé en ce que** quatre résistances piézoélectriques (7) sont disposées sur chaque poutre de flexion (4a-d).

7. Dispositif selon la revendication 6, **caractérisé en ce que** les quatre résistances piézoélectriques (7) sont interconnectées pour former un pont de résistances de Wheatstone.

8. Dispositif selon la revendication 1, **caractérisé en ce que** pour la mesure de la déviation de la masse sismique, on utilise une prise capacitive.

EP 0 851 233 B1

FIG.1

FIG.2

FIG.3

8

FIG.4

FIG.5